# EUROPEAN PATENT APPLICATION

(11) **EP 4 671 296 A1**
(43) Date of publication of application: **31.12.2025**
(21) Application number: 24915891.6
(22) Date of filing: 08.01.2024
(51) Int. Cl.: C08G 18/72, C08G 18/76, H01M 10/056, H01M 10/0565

(54) **POLYMER AND USE THEREOF**

(71) Applicant: Shenzhen Senior Technology Material Co., Ltd., Shenzhen, Guangdong 518106 (CN)
(72) Inventor: XIE, Yankun, Shenzhen, Guangdong 518106 (CN); WANG, Yanjie, Shenzhen, Guangdong 518106 (CN); LIN, Lujing, Shenzhen, Guangdong 518106 (CN); ZHANG, Xiaomin, Shenzhen, Guangdong 518106 (CN)
(74) Representative: J A Kemp LLP
(86) International application number: PCT/CN2024/071131
(87) International publication number: WO 2025/147809

(57) **Abstract**

A polymer and use thereof, where the polymer includes at least a structural formula represented by Formula 1; in in Formula 1, R₁ is selected from a substituted or unsubstituted C1-C30 alkyl and a substituted or unsubstituted C6-C60 aryl; R₂ is selected from a substituted or unsubstituted polyether group, a substituted or unsubstituted C1-C30 alkyl, a substituted or unsubstituted C1-C30 alkoxy and *-b1-S-S-b2-*; b1 and b2 are each independently selected from a substituted or unsubstituted C2-C15 chain alkyl and a substituted or unsubstituted C6-C60 aryl; R₃ is an ionic liquid group; and n ≥ 1 and n is an integer. The special molecular structure of the polymer enables it to have excellent room temperature ionic conductivity when applied to a polymer electrolyte.

## Description

### TECHNICAL FIELD

Embodiments of the present application relate to a polymer and use thereof, belonging to the field of energy technology.

### BACKGROUND

In the 1990s, lithium-ion batteries were successfully industrialized by Sony. In the decades of development, the lithium-ion batteries have been widely used in all walks of life, such as 3C electronic products, electric vehicles, energy storage, and aerospace. Currently, the lithium-ion batteries use organic electrolytes such as ethers and carbonates as the medium for lithium ion transport, but the organic electrolytes have safety issues such as high volatility, easy leakage, flammability, and explosiveness. In addition, during the cycle of the lithium-ion batteries, uneven lithium deposition at an interface of a negative electrode may cause the formation and growth of lithium dendrites, which may pierce a separator of a battery, causing a short circuit in the battery and thus causing safety issues such as thermal runaway or battery fire.

Inorganic solid electrolytes are widely used to solve the safety problems of the lithium-ion batteries due to their good electrochemical stability, thermal stability and good mechanical strength. However, the inorganic solid electrolytes have the performance defects of being brittle and thus they are prone to cracking during use, which leads to increased internal resistance of batteries or even failure. In addition, the poor solid-solid contact interface between the inorganic solid electrolytes and positive and negative electrodes of batteries may also make the internal resistance of the lithium-ion batteries larger, resulting in a rapid decrease in the capacity and performance of the lithium-ion batteries. In order to overcome the defects of the inorganic solid electrolytes, polymer electrolytes have emerged as the times require. The polymer electrolytes have good processability, flexibility and good mechanical strength, which may compensate for the performance defects of the inorganic solid electrolytes. However, they usually have low room temperature ionic conductivity.

### SUMMARY

The present application provides a polymer, and a special molecular structure of the polymer enables the polymer to have excellent room temperature ionic conductivity when applied to a polymer electrolyte.

The present application provides a polymer electrolyte, which has excellent room temperature ionic conductivity and may be widely applied to a battery to improve the electrochemical performance of the battery.

The present application provides a separator, which includes the polymer or polymer electrolyte described above, so when the separator is applied to a battery, the electrochemical performance of the battery can be improved.

The battery of the present application includes any one of the polymer, polymer electrolyte and separator described above and thus has excellent electrochemical performance.

The present application provides a polymer, including at least a structural formula represented by Formula 1: 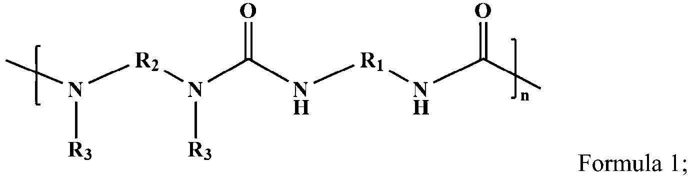
in Formula 1, R₁ is selected from a substituted or unsubstituted C1-C30 alkyl, and a substituted or unsubstituted C6-C60 aryl;
R₂ is selected from a substituted or unsubstituted polyether group, a substituted or unsubstituted C1-C30 alkyl, a substituted or unsubstituted C1-C30 alkoxy, *-b1-S-S-b2-*; b1 and b2 are each independently selected from a substituted or unsubstituted C2-C15 chain alkyl, a substituted or unsubstituted C6-C60 aryl; and R₃ is an ionic liquid group; and
n ≥ 1 and n is an integer.

In the polymer as described above, when the polymer includes a plurality of structural formulas of Formula 1, R₃ is selected from the same ionic liquid group.

In the polymer as described above, when the polymer includes a plurality of structural formulas of Formula 1, at least one of the following conditions is met:
a) R₁ in the plurality of structural formulas of Formula 1 is selected from the same group; and
b) R₂ in the plurality of structural formulas of Formula 1 is selected from the same group.

In the polymer as described above, R₃ is selected from one of an imidazole-based ionic liquid group, a pyridine-based ionic liquid group, a quaternary ammonium-based ionic liquid group or a quaternary phosphonium-based ionic liquid group.

In the polymer as described above, the R₃ is selected from any one of the following groups: 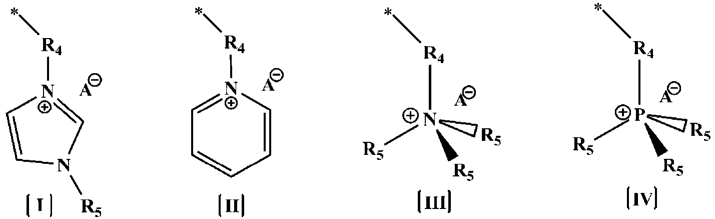 where R₄ is selected from a substituted or unsubstituted C1-C30 alkyl, a substituted or unsubstituted C1-C30 alkoxy; R₅ is selected from a substituted or unsubstituted C1-C10 alkyl; and A is selected from BF₄⁻, PF₆⁻, TFSI⁻, OTf⁻, DCA⁻ or TOS⁻.

In the polymer as described above, R₂ is selected from any one of the following groups: 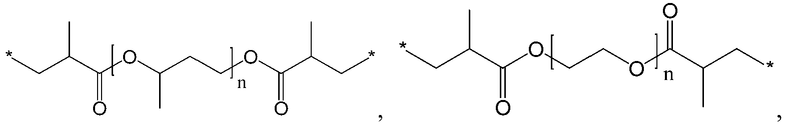 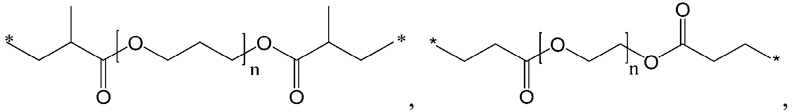 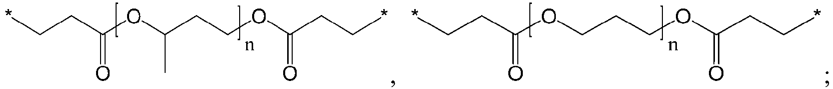 where n is a positive integer.

In the polymer as described above, at least one of the following conditions is met:
a) R₁ is a cyclic structure; and
b) R₂ is a chain structure.

In the polymer as described above, the polymer is obtained by reacting an imine-based ionic liquid with a diisocyanate-based compound.

The present application provides a polymer electrolyte, including a lithium salt and the polymer as described above.

In the polymer electrolyte as described above, a mass content of the lithium salt in the polymer electrolyte is 5% to 30%, and a mass content of the polymer is 70% to 95%.

The present application provides a separator, including: a porous substrate; and the polymer as described above or the polymer electrolyte as described above, disposed on at least part of a surface of the porous substrate and/or in at least part of pores of the porous substrate.

The present application provides a battery, including the polymer as described above;
or, including the composite electrolyte as described above;
or, including the separator as described above.

The polymer of the present application includes the structural formula represented by Formula 1. The ionic liquid group in the polymer may interact well with the anionic group, thereby fixing the anion, allowing the lithium ion to dissociate quickly, increasing the concentration of the lithium ion that may migrate freely in the electrolyte, and being beneficial to improving the ionic conductivity and ion migration number of the polymer electrolyte. At the same time, the structure of the polymer is relatively regular, and the ionic liquid may be dispersed evenly in the polymer, which is beneficial to improving the rapid conduction of the lithium ion in the electrolyte, reducing the transport resistance of the lithium ion, and improving the electrochemical performance of the polymer electrolyte.

The polymer electrolyte of the present application includes the polymer described above. The polymer electrolyte has excellent room temperature ionic conductivity and mechanical strength and may be widely applied to a battery to improve the electrochemical performance of the battery.

The separator of the present application includes the polymer or polymer electrolyte described above, so when the separator is applied to a battery, the electrochemical performance of the battery can be improved.

The battery of the present application includes any one of the polymer, polymer electrolyte and separator described above, and thus has excellent electrochemical performance.

### BRIEF DESCRIPTION OF DRAWINGS

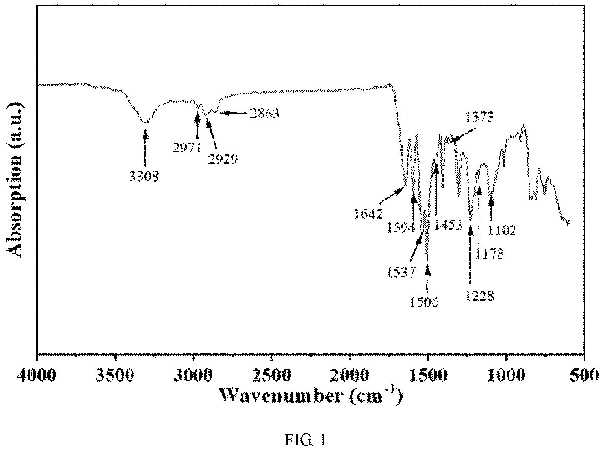

FIG. 1 is an infrared spectrum of a polymer in Example 1 of the present application.

### DESCRIPTION OF EMBODIMENTS

In order to make the purpose, technical solutions and advantages of the embodiments of the present application more clear, the technical solutions in the embodiments of the present application will be clearly and completely described below in conjunction with the drawings in the embodiments of the present application. Obviously, the described embodiments are some rather than all of the embodiments of the present application. All other embodiments obtained by those of ordinary skill in the art without creative work based on the embodiments in the present application belong to the scope of protection of the present application.

The present application provides a polymer, and the polymer at least includes a structural formula represented by Formula 1: 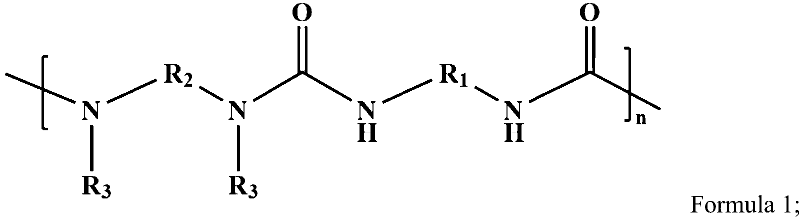
in Formula 1, R₁ is selected from a substituted or unsubstituted C1-C30 alkyl, and a substituted or unsubstituted C6-C60 aryl; R₂ is selected from a substituted or unsubstituted polyether group, a substituted or unsubstituted C1-C30 alkoxy, a substituted or unsubstituted C1-C30 alkyl, and *-b1-S-S-b2-*; b1 and b2 are each independently selected from a substituted or unsubstituted C2-C15 chain alkyl and a substituted or unsubstituted aryl; R₃ is an ionic liquid group;
n ≥ 1 and n is a positive integer.

Specifically, R₁ is selected from a substituted or unsubstituted C1-C30 alkyl (for example, it may be a linear alkyl, a branched alkyl, cycloalkyl, a substituted linear alkyl, a substituted branched alkyl or a substituted cycloalkyl) and a substituted or unsubstituted C6-C60 aryl (for example, it may be a substituted phenyl, an unsubstituted phenyl, a substituted biphenyl or an unsubstituted biphenyl).

R₂ is selected from a substituted or unsubstituted polyether groups (for example, it may be a substituted chain polyether group or an unsubstituted chain polyether group), a substituted or unsubstituted C1-C30 alkyl (for example, it may be a linear alkyl, a branched alkyl, a cycloalkyl, a substituted linear alkyl, a substituted branched alkyl or a substituted cycloalkyl), a substituted or unsubstituted C1-C30 alkoxy (for example, it may be a substituted branched alkoxy, a substituted linear alkoxy, a substituted cyclic alkoxy, an unsubstituted linear alkoxy, an unsubstituted branched alkoxy or an unsubstituted cyclic alkoxy), and *-b1-S-S-b2-* (b1 and b2 are each independently selected from a substituted or unsubstituted C2-C15 chain alkyl and a substituted or unsubstituted C6-C60 aryl, where the chain alkyl may be a linear alkyl or a branched alkyl, the aryl may be an unsubstituted phenyl, a substituted phenyl, a substituted biphenyl or unsubstituted biphenyl; and * is a position connected to a main chain in Formula 1).

The present application does not particularly limit the substituents in R₁ and R₂, and the substituents may be substituents commonly used in the art. Exemplarily, the substituents may be selected from a substituted or unsubstituted C1-C30 alkyl, a substituted or unsubstituted C2-C30 alkenyl, a substituted or unsubstituted C3-30 alkynyl, an ester group, a substituted or unsubstituted C1-C30 alkoxy, a substituted or unsubstituted C6-C60 aryl or a halogen.

The ionic liquid group in R₃ refers to an organic group containing a cation and an anion.

n is a polymerization degree, and is a positive integer; further, 50 ≤ n ≤ 800.

The polymer of the present application includes the structural formula represented by Formula 1. The ionic liquid group in the polymer may interact well with the anionic group, thereby fixing the anion, allowing the lithium ion to dissociate quickly, increasing the concentration of the lithium ion that may migrate freely in the electrolyte, and being beneficial to improving the ionic conductivity and ion migration number of the polymer electrolyte. At the same time, the structure of the polymer is relatively regular, and the ionic liquid may be dispersed evenly in the polymer, which is beneficial to improving the rapid conduction of the lithium ion in the electrolyte, reducing the transport resistance of the lithium ion, and improving the electrochemical performance of the polymer electrolyte. It is worth mentioning that the ionic liquid group may also improve the flame-retardant performance of the polymer, so that the polymer electrolyte including the polymer has excellent flame-retardant performance, thereby improving the safety performance of the battery.

It can be understood that in the polymer of the present application, R₁, R₂ and R₃ in the structure represented by Formula 1 may be selected from the same group or different groups, that is, when the polymer includes a plurality of structures of Formula 1 (when n ≥ 2), R₁ in the plurality of structures of Formula 1 may be the same or different, R₂ in the plurality of structures of Formula 1 may be the same or different, and R₃ in the plurality of structures of Formula 1 may be the same or different.

In some embodiments of the present application, when a polymer includes plurality of structures of Formula 1, R₃ in the plurality of structures of Formula 1 is selected from the same ionic liquid group. The same ionic liquid group is beneficial to improving the uniformity of the ion conduction, thereby further improving the ionic conductivity of the polymer.

In some embodiments of the present application, when the polymer includes a plurality of structures of Formula 1, R₁ in the plurality of structures of Formula 1 is selected from the same group and R₂ in the plurality of structures of Formula 1 is selected from the same group. Selecting the same group is beneficial to improving the structural uniformity of the polymer and further improving the mechanical performance and ionic conductivity of the polymer.

In some embodiments of the present application, R₃ is selected from one of an imidazole-based ionic liquid group, a pyridine-based ionic liquid group, a quaternary ammonium-based ionic liquid group or a quaternary phosphonium-based ionic liquid group.

In the present application, the polymer including the above ionic liquid group may have more excellent room temperature ionic conductivity and flame-retardant performance when applied to the polymer electrolyte, and the ionic liquid used to form the above ionic liquid group is easy to be obtained and relatively cheap, which helps to save the production cost.

Further, R₃ is selected from any one of the following groups: 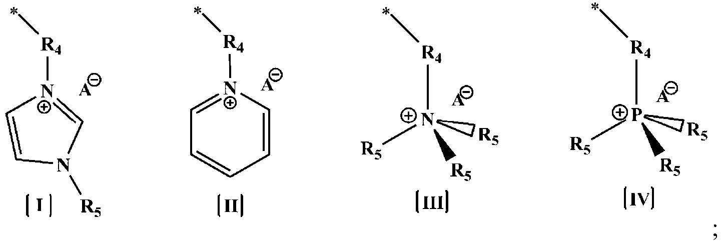 where R₄ is selected from a substituted or unsubstituted C1-C30 alkyl and a substituted or unsubstituted C1-C30 alkoxy; R₅ is selected from a substituted or unsubstituted C1-C10 alkyl; and A is selected from BF₄⁻, PF₆⁻, TFSI⁻, OTf, DCA⁻ or TOS⁻.

Specifically, * in the above structural formula refers to a position connected to the main chain represented by Formula 1.

R₄ is selected from a substituted or unsubstituted C1-C30 alkyl (for example, it may be a substituted linear alkyl, a substituted branched alkyl, a substituted cycloalkyl, an unsubstituted branched alkyl, an unsubstituted linear alkyl or an unsubstituted cycloalkyl), a substituted or unsubstituted C1-C30 alkoxy (for example, it may be a substituted linear alkoxy, a substituted cyclic alkoxy, a substituted branched alkoxy, an unsubstituted cyclic alkoxy, an unsubstituted linear alkoxy or an unsubstituted branched alkoxy); and R₅ is selected from a substituted or unsubstituted C1-C10 alkyl (for example, a substituted linear alkyl, a substituted branched alkyl, a substituted cycloalkyl, an unsubstituted branched alkyl, an unsubstituted linear alkyl or an unsubstituted cycloalkyl).

Where the anionic group may be obtained by dissociation of the corresponding salt. Exemplarily, the tetrafluoroborate ion is obtained by dissociation of lithium tetrafluoroborate, and the hexafluorophosphate ion is obtained by dissociation of lithium hexafluorophosphate. The structures of the anionic groups of the present application are as follows:

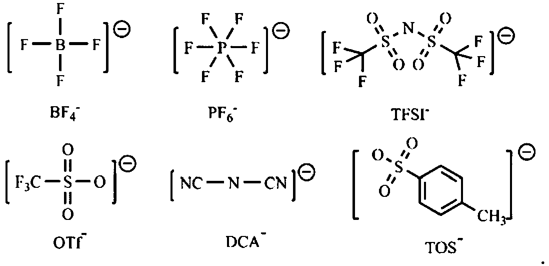

The present application does not particularly limit the substituents in R₄ and R₅, and the substituents may be substituents commonly used in the art. Exemplarily, the substituents may be selected from at least one of a substituted or unsubstituted C1-C30 alkyl, a substituted or unsubstituted C2-C30 alkenyl, a substituted or unsubstituted C3-C30 alkynyl, an ester group, a substituted or unsubstituted C1-C30 alkoxy, a substituted or unsubstituted C6-C60 aryl and halogen.

When R₃ is selected from the above structural formula, the production cost can be reduced while further improving the electrochemical performance and flame-retardant performance of the battery.

In some embodiments of the present application, R₂ is selected from any one of the following groups, but is not limited to the structures shown below:

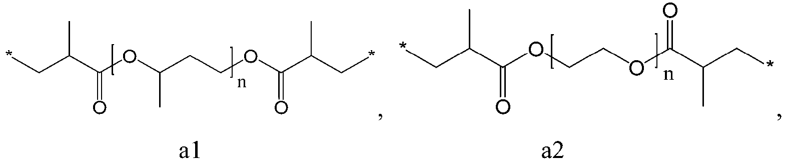

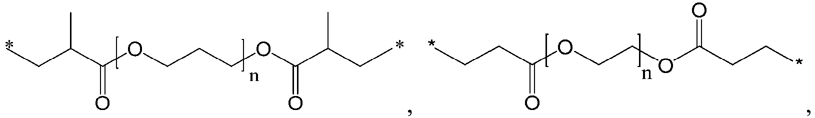

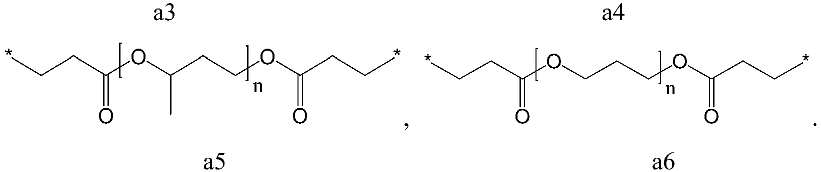

n in R₂ is a polymerization degree, and may be a positive integer between 1 and 30. The polymerization degree in each structural formula in the present application may be the same or different; and * refers to a position connected to the main chain represented by Formula 1.

When R₂ is selected from the above structural formulas, the electrochemical performance of the battery can be further improved.

In some embodiments of the present application, R₁ is a cyclic structure. That is, R₁ is selected from a substituted or unsubstituted C1-C30 cycloalkyl (for example, it may be a substituted cycloalkyl or an unsubstituted cycloalkyl).

When R₁ is a cyclic structure, it helps to improve the rigidity and thermal performance of the polymer, thereby improving the mechanical performance and heat resistance of the polymer electrolyte and extending the service life of the battery.

Further, R₂ is a chain structure. That is, R₂ is selected from a substituted or unsubstituted chain polyether group (for example, it may be a substituted linear polyether group, a substituted branched polyether group, an unsubstituted linear polyether group or an unsubstituted branched polyether group), a substituted or unsubstituted C1-C30 chain alkoxy (for example, it may be a substituted branched alkoxy or a substituted linear alkoxy) and *-b1-S-S-b2-* (b1 and b2 are each independently selected from C2-C15 chain alkyl, and the alkyl is a linear alkyl or a branched alkyl).

In the present application, when R₂ is a chain structure, the transport performance of the lithium ion between ionic liquid structures may be regulated to improve the transport efficiency of the lithium ions in the polymer electrolyte.

In particular, when R₁ in the polymer is a cyclic structure and R₂ is a chain structure, the structure of the polymer has both rigidity and flexibility, which may enable the polymer electrolyte to have both excellent mechanical performance and lithium ion transport performance, thereby improving the electrochemical performance of the battery and extending the service life of the battery.

The present application does not particularly limit the raw materials and methods for preparing the polymer. The raw materials and preparation methods corresponding to the purpose may be freely selected as long as the polymer can meet the range of the above various features.

In some embodiments of the present application, the polymer is obtained by reacting an imine-based ionic liquid with a diisocyanate-based compound.

The present application does not particularly limit the imine-based ionic liquid, which may be an ionic liquid containing an imine group commonly used in the art. The imine-based ionic liquid may be purchased commercially or prepared in a laboratory.

The present application does not particularly limit the diisocyanate-based compound. The diisocyanate-based compound may be a compound containing two isocyanate groups commonly used in the art. Exemplarily, the diisocyanate-based compound may be selected from at least one of isophorone diisocyanate, diphenylmethane 4,4'-diisocyanate, p-phenylene diisocyanate, 1,3-phenylene diisocyanate, toluene 2,6-diisocyanate, m-phenylenedimethyl diisocyanate, toluene-2,4-diisocyanate and 4,4'-methylenedicyclohexyl diisocyanate.

In the present application, the imine-based ionic liquid reacts with the diisocyanate-based compound, where the imine-based ionic liquid is used to form the R₂ and R₃ groups, and the diisocyanate-based compound is used to form the R₁ group.

The present application prepares the polymer through the above process, not only the polymer with excellent comprehensive performance can be obtained, but also the preparation method is simple and is suitable for wide promotion and application.

The present application does not particularly limit the specific reaction conditions of the imine-based ionic liquid and the diisocyanate-based compound. Generally, an amount of the diisocyanate-based compound needs to be not less than an amount of the imine-based ionic liquid, with the main purpose of enabling the imine group in the imine-based ionic liquid to undergo a complete chemical reaction. Further, a moderately excessive amount of isocyanate groups may form potential chemical reaction sites in the obtained polyurea polymer electrolyte, to undergo chemical cross-linking reactions with other components in the polymer electrolyte, increasing the cross-linking density of the polyurea polymer electrolyte. Exemplarily, the remaining isocyanate groups may continue to react with compounds containing an amine group or hydroxyl, increasing the cross-linking density of the polymer electrolyte; and a moderately excessive amount of isocyanate groups may react with water, which may appropriately eliminate the adverse effects of water on the performance of the polyurea polymer electrolyte. In some embodiments, a molar ratio of the imine group in the imine-based ionic liquid to the isocyanate group in the diisocyanate-based compound may be 1:(1.0-1.2).

In some embodiments, when the temperature is 40°C to 80°C and the time is 30 min to 24h during the reaction of the imine-based ionic liquid and the diisocyanate-based compound, a polymer with better performance may be obtained. In addition, a catalyst may be added during the reaction of the imine-based ionic liquid and the diisocyanate-based compound. The catalyst may be an organic tin catalyst or an alcohol amine catalyst, and an amount of the catalyst may be 0.2 mol% to 3 mol% of a total amount of monomers (a sum of the amount of the imine-based ionic liquid and the diisocyanate-based compound).

In some embodiments, as shown in Formula 2, the imine-based ionic liquid may be prepared by an addition reaction between an amine-based ionic liquid and a diene-based compound.

The amine-based ionic liquid may be an ionic liquid containing an amine group commonly used in the art, and the amine-based ionic liquid may be purchased commercially or prepared in a laboratory.

The diene-based compound may be a compound containing two alkenyl groups commonly used in the art. Exemplarily, the diene-based compound may be selected from at least one of poly(ethylene glycol) diacrylate, poly(ethylene glycol) dimethacrylate, poly(ethylene glycol)-block-polypropylene glycol-block-poly(ethylene glycol) diacrylate, ethylene glycol diacrylate, triethylene glycol diacrylate, tetra(ethylene glycol) diacrylate, ethylene glycol dimethacrylate, poly(propylene glycol) dimethacrylate, bis(2-methylpropylene) ethoxy disulfide, and diallyl disulfide. The structural formulas of some of the diene-based compounds are as follows:

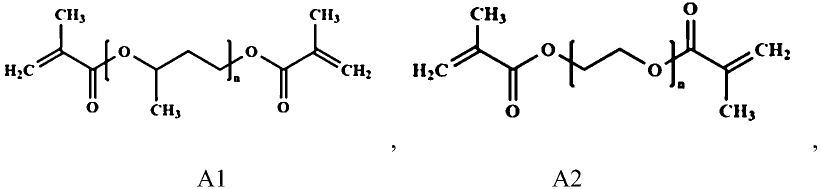

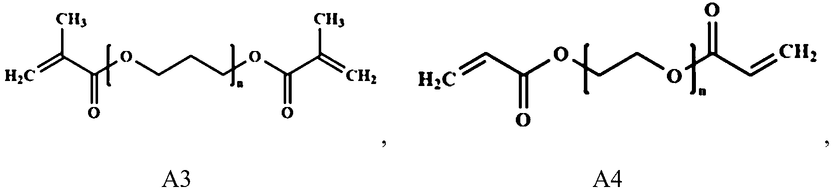

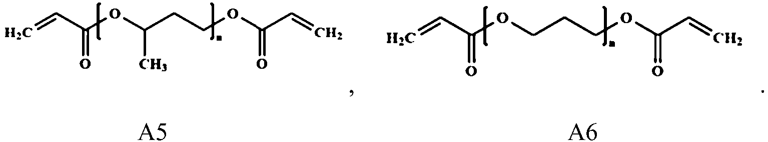

In the above structures, n represents the polymerization degree, and is a positive integer.

As shown in Formula 2, when the amine-based ionic liquid reacts with the diene-based compound, the diene-based compound is used to form R₂, and the amine-based ionic liquid is used to form R₃, thereby obtaining the imine-based ionic liquid including R₃ and R₂.

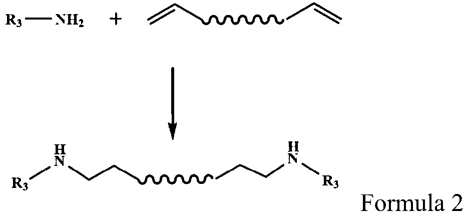

Specifically, the A1 compound may form an a1 group, the A2 compound may form an a2 group, the A3 compound may form an a3 group, the A4 compound may form an a4 group, the A5 compound may form an a5 group, and the A6 compound may form an a6 group.

The present application does not particularly limit the specific reaction conditions between the amine-based ionic liquid and the diene-based compound. The amine-based ionic liquid is moderately excessive, with the main purpose of ensuring that the diene-based compound and the amine group may undergo a complete chemical reaction. Further, a molar ratio of the amine group in the amine-based ionic liquid to the alkenyl in the diene-based compound may be (1.0-1.2):1. In some embodiments, during the reaction of the amine-based ionic liquid with the diene-based compound, when the temperature is 40°C to 90°C and the time is 8h to 24h, it is helpful to obtain a polymer with excellent comprehensive performance.

A second aspect of the present application provides a polymer electrolyte, which includes a lithium salt and the polymer of the first aspect of the present application.

The lithium salt is used to transport lithium ion, the polymer is the skeleton of the polymer electrolyte, and the lithium salt is embedded in the polymer skeleton.

The present application does not particularly limit the lithium salt, and the lithium salt may be selected from the lithium salt commonly used in the art. Exemplarily, the lithium salt may be selected from at least one of lithium bis(trifluoromethylsulfonyl) imide (LiTFSI), lithium bis(difluorosulfonyl) imide (LiFSI), lithium tetrafluoroborate (LiBF₄) and lithium hexafluorophosphate (LiPF₆). The polymer electrolyte of the present application, due to including the polymer of the first aspect, can improve the electrochemical performance of the battery and extend the service life of the battery when applied to the battery.

It can be understood that as for the addition of the lithium salt in the present application, the corresponding lithium salt may be directly added during the preparation of the polymer electrolyte, or the corresponding lithium salt may be added in the form of an electrolyte during the preparation of the battery.

In some embodiments, the polymer of the first aspect may be uniformly mixed with the lithium salt and a solvent, and then the solvent may be removed to form the polymer electrolyte including the polymer of the first aspect and the lithium salt.

In some other embodiments, the polymer electrolyte is obtained by reaction of a raw material system including the lithium salt, the imine-based ionic liquid, and the diisocyanate-based compound.

Specifically, the solvent, the lithium salt, the imine-based ionic liquid and the diisocyanate-based compound may be mixed, to obtain the raw material system, and the raw material system is caused to react, where the imine-based ionic liquid will react with the diisocyanate-based compound to form a polymer including the structure of Formula 1, whereas an electrolyte formed by the lithium salt and the solvent will be embedded in the polymer; and after drying to remove the solvent, the polymer electrolyte including the lithium salt and the polymer of the first aspect is obtained.

The present application does not particularly limit the preparation method of the polymer electrolyte, and those skilled in the art may freely select a preparation method corresponding to the purpose.

In some embodiments, the polymer electrolyte may be obtained by forming a self-supporting film. For example, it may be obtained by applying the raw material system of the polymer electrolyte to a carrier (such as a release film, an electrode sheet or a battery housing) to initiate polymerization of the raw material system, or by casting the polymer system onto a release film and curing to form a film and then peeling off, or by extruding the polymer system into a film.

In some embodiments, the polymer electrolyte may be prepared by a method including the following steps:
adding a polymer to a first solvent, to obtain a first mixed solution; adding a lithium salt to the first solution and stirring evenly, to obtain a polymer system; casting the polymer system onto a surface of a release film, then removing the first solvent and separating from the release film, to obtain the composite electrolyte.

The present application does not particularly limit the first solvent, which may be selected from commonly used solvents, such as N-methylpyrrolidone (NMP), acetone, methanol, ethanol, etc.

The present application does not particularly limit a thickness of the porous substrate, for example, it may be preferably 5 µm to 50 µm. The present application does not particularly limit a pore diameter and porosity in the porous substrate, either, for example, they may be preferably 0.2 µm to 100 µm and 10% to 99%, respectively, and further preferably 0.5 µm to 50 µm and 30% to 70%, respectively.

In some embodiments of the present application, when a mass content of the lithium salt in the polymer electrolyte is 5% to 30% and a mass content of the polymer is 70% to 95%, the polymer electrolyte has more excellent room temperature ionic conductivity and mechanical performance, and when applied to batteries, it can further improve the electrochemical performance of the battery and extend the service life of the battery.

A third aspect of the present application provides a separator, including: a porous substrate; and the polymer of the first aspect or the polymer electrolyte of the second aspect, disposed on at least part of a surface of the porous substrate and/or in at least part of pores of the porous substrate.

It can be understood that in the separator of the present application, the polymer may be disposed on part or all of the surface of the porous substrate, or in part or all of the pores of the porous substrate; or the polymer electrolyte may be disposed on part or all of the surface of the porous substrate, or in part or all of the pores of the porous substrate.

The present application does not limit the specific arrangement method. The commonly used arrangement methods in the art can be used to arrange the polymer or polymer electrolyte on at least part of the surface of the porous substrate and/or in at least part of the pores of the porous substrate to form the separator.

In some embodiments, the separator may be obtained by coating the raw material system of the polymer electrolyte on the separator, initiating polymerization of the raw material system, and curing; or it may be obtained by hot pressing or rolling a self-filming polymer electrolyte and the porous substrate; or it may be obtained by coating the polymer system onto the separator and curing. The separator has the porous substrate, and the porous substrate may be any conventional porous substrate for battery separators. For example, the porous substrate can be a film or fabric substrate formed by any one of the following polymers: the polymer may be selected from at least one of polyethylene terephthalate, polybutylene terephthalate, polymethyl methacrylate, polyacetal, polyamide, polycarbonate, polyimide, polyetheretherketone, polyethersulfone, polyphenylene oxide, polyphenylene sulfide, polyethylene naphthalene, polyvinylidene fluoride, polyethylene oxide, polyacrylonitrile, tetrafluoropropylene copolymer, and hexafluoropropylene copolymer; or it may be selected from at least one of copolymers, homopolymers, and derivatives thereof of propylene, 1-butene, pentene, 1-hexene, 4-methyl-1-pentene, 1-octene, and 1-decene.

In some embodiments, it may be prepared by a method including the following steps: adding a polymer to a first solvent, to obtain a first mixed solution; adding a lithium salt to the first solution and stirring evenly, to obtain a polymer system; casting the polymer system onto at least part of a surface of a porous substrate, and then removing the first solvent, to obtain the separator.

The present application does not particularly limit the first solvent, which may be selected from commonly used solvents, such as N-methylpyrrolidone (NMP), acetone, methanol, ethanol, etc.

In some embodiments, the preparation method of the separator may further include the following steps: subjecting the separator obtained after drying to a roller pressing treatment, so that the bonding between the polymer electrolyte and the porous substrate is tighter.

The separator of the present application, due to including the polymer or polymer electrolyte described above, can improve the electrochemical performance of the battery and broaden the application scenarios of the battery when applied to the battery.

A fourth aspect of the present application a battery, including the polymer of the first aspect;
or, including the polymer electrolyte of the second aspect;
or, including the separator of the third aspect.

It can be understood that the battery of the present application further includes a positive electrode sheet, a negative electrode sheet and an outer package.

In some embodiments, the polymer and the electrolyte solution may be combined to form a gel electrolyte solution for use in the battery. That is, the battery may be obtained by stacking the positive electrode sheet, the polymer (or the separator) and the negative electrode sheet to obtain an electrode assembly, placing the electrode assembly in the outer package, then injecting the electrolyte solution therein and sealing.

In some other embodiments, the battery may be obtained by stacking the positive electrode sheet, the polymer electrolyte (or the separator) and the negative electrode sheet to obtain an electrode assembly, placing the electrode assembly in the outer package, and then sealing.

The battery of the present application, due to including the polymer electrolyte described above, has excellent electrochemical performance, excellent user experience, and is suitable for wide promotion and application.

The technical solutions of the present application are described in detail below through specific examples.

The sources of some components in the examples and comparative examples are described as follows. Components for which specific experimental steps or conditions are not specified in the examples or comparative examples may be obtained by operations or conditions of the conventional experimental steps described in the prior art in the art.
(I) Amine-based ionic liquid
   (1) 1-Aminoethyl-3-methylimidazole bis(trifluoromethanesulfonyl)imine (CAS: 1384979-21-8) and 1-aminopropyl-3-methylimidazole tetrafluoroborate (CAS: 914770-49-3): all purchased from Qingdao Aolike New Material Technology Co., Ltd;
   (2) (6-Aminohexyl)triphenylphosphonium bromide bis(trifluoromethanesulfonyl) imine: prepared in the laboratory, with the preparation process as follows:
      dissolving (6-aminohexyl)triphenylphosphonium bromide hydrobromide (purchased from Sigma-Aldrich) in anhydrous ethanol (purchased from Shanghai Aladdin Biochemical Technology Co., Ltd), stirring until fully dissolved, then gradually adding silver bis(trifluoromethanesulfonyl) imine (purchased from Sigma-Aldrich), continuing stirring until silver bromide (AgBr) precipitate is formed, then removing the precipitate by filtering, removing the anhydrous ethanol by vacuum rotary evaporation, and heating and drying, to obtain (6-aminohexyl)triphenylphosphonium bromide bis(trifluoromethanesulfonyl) imine.
(II) Triethylene glycol diacrylate: purchased from Shanghai Aladdin Biochemical Technology Co., Ltd.
(III) 4,4'-Methylenedicyclohexyl diisocyanate: purchased from Shanghai Aladdin Biochemical Technology Co., Ltd.
(IV) Dibutyltin dilaurate: purchased from Sigma-Aldrich.
(V) Hexamethylene diisocyanate: purchased from Shanghai Aladdin Biochemical Technology Co., Ltd.
(VI) 1,4-Cyclohexanedimethanol divinyl ether: purchased from Shanghai Macklin Biochemical Technology Co., Ltd.
(VII) m-phenylenedimethyl diisocyanate: purchased from Shanghai Macklin Biochemical Technology Co., Ltd.
(VIII) Poly(ethylene glycol) diacrylate (Mn = 575): purchased from Shanghai Macklin Biochemical Technology Co., Ltd.
(IX) p-Phenylene diisocyanate: purchased from Shanghai Macklin Biochemical Technology Co., Ltd.
(X) Diallyl disulfide: purchased from Shanghai Macklin Biochemical Technology Co., Ltd.

### Example 1

The battery of this example is prepared by a method including the following steps.

### 1) Preparation of polymer

An amine-based ionic liquid and a diene-based compound were subjected to a first reaction, to obtain a imine-based ionic liquid;
the imine-based ionic liquid and the diisocyanate-based compound were subjected to a second reaction, to obtain a polymer;
where the amine-based ionic liquid is 1-aminoethyl-3-methylimidazole bis(trifluoromethanesulfonyl)imine, the diene-based compound is triethylene glycol diacrylate, and the diisocyanate-based compound is 4,4'-diphenylmethane diisocyanate;
in the first reaction, a ratio of a molar content of amine group in the amine-based ionic liquid to a molar content of the alkenyl group in the diene-based compound is 1:1, the temperature is 60°C, and the time is 12 h;
in the second reaction, a ratio of a molar content of imine groups in the imine-based ionic liquid to a molar content of isocyanate groups in the diisocyanate-based compound is 1:1, the temperature is 60°C, the time is 12 h, the catalyst is dibutyltin dilaurate, and an amount of the catalyst is 0.2 mol% of a sum of amounts of the imine-based ionic liquid and the diisocyanate-based compound.

### 2) Preparation of polymer electrolyte

A solvent, a lithium salt and the polymer of step 1) were mixed and dried, to obtain a polymer electrolyte;
where the lithium salt is lithium hexafluorophosphate, and the solvent is NMP;
in the polymer electrolyte, a mass content of the lithium salt is 10%, and a mass content of the polymer is 90%.

### 3) Preparation of battery

A positive electrode sheet, the polymer electrolyte and a negative electrode sheet were stacked, to obtain an electrode assembly, and the electrode assembly was placed in an aluminum-plastic film and sealed, to obtain a battery;
where the positive electrode sheet includes an aluminum foil and a positive electrode active layer disposed on a surface of the aluminum foil, the positive electrode active layer includes lithium cobaltate, a conductive agent Super P, and a binder PVDF, where a mass ratio of lithium cobaltate, the conductive agent, and the binder is 96:2:2; and
the negative electrode sheet includes a copper foil and a negative electrode active layer disposed on a surface of the copper foil, the negative electrode active layer includes silicon-doped graphite, a conductive agent Super P, and a binder PAA, where a mass ratio of the silicon-doped graphite, the conductive agent, and the binder is 95:2:3.

### Example 2

A preparation method of a battery of this example is substantially the same as that of Example 1, with the difference being as follows:
1) preparation of polymer
   the diisocyanate-based compound is hexamethylene diisocyanate.

### Example 3

A preparation method of a battery of this example is substantially the same as that of Example 1, with the difference being as follows:
1) preparation of polymer
   the amine-based ionic liquid is 1-aminopropyl-3-methylimidazole tetrafluoroborate, the diene-based compound is 1,4-cyclohexanedimethanol divinyl ether, and the diisocyanate-based compound is m-phenylenedimethyl diisocyanate.

### Example 4

A preparation method of a battery of this example is substantially the same as that of Example 1, with the difference being as follows:
1) preparation of polymer
   the amine-based ionic liquid is 1-aminopropyl-3-methylimidazole tetrafluoroborate, the diene-based compound is poly(ethylene glycol) diacrylate (Mn = 575), and the diisocyanate-based compound is p-phenylene diisocyanate.

### Example 5

A preparation method of a battery of this example is substantially the same as that of Example 1, with the difference being as follows:
1) preparation of polymer
   the amine-based ionic liquid is 1-aminopropyl-3-methylimidazole tetrafluoroborate, the diene-based compound is diallyl disulfide, and the diisocyanate-based compound is p-phenylene diisocyanate.

### Example 6

A preparation method of a battery of this example is substantially the same as that of Example 1, with the difference being as follows:

### 1) preparation of polymer

The amine-based ionic liquid is (6-aminohexyl)triphenylphosphonium bromide bis(trifluoromethanesulfonyl) imine, the diene-based compound is poly(ethylene glycol) diacrylate (Mn = 575), and the diisocyanate-based compound is p-phenylene diisocyanate;
in the first reaction, a ratio of the molar content of the amine group in the amine-based ionic liquid to the molar content of the alkenyl group in the diene-based compound is 1.2:1; and
in the second reaction, the ratio of the molar content of the imine group in the imine-based ionic liquid to the molar content of the isocyanate group in the diisocyanate-based compound is 1:1.2.

### Example 7

A preparation method of a battery of this example is substantially the same as that of Example 1, with the difference being as follows:
the polymer electrolyte is prepared by a method including the following steps:
subjecting an amine-based ionic liquid and a diene-based compound to a first reaction, to obtain an imine-based ionic liquid;
subjecting the imine-based ionic liquid, a diisocyanate-based compound, a lithium salt and a solvent to a second reaction, and drying, to obtain a polymer electrolyte;
where the amine-based ionic liquid is 1-aminoethyl-3-methylimidazole bis(trifluoromethanesulfonyl)imine, the diene-based compound is triethylene glycol diacrylate, and the diisocyanate-based compound is 4,4'-methylenedicyclohexyl diisocyanate;
in the first reaction, a ratio of a molar content of the amine group in the amine-based ionic liquid to a molar content of the alkenyl group in the diene-based compound is 1:1, the temperature is 60°C, and the time is 12 h;
in the second reaction, a ratio of a molar content of the imine group in the imine-based ionic liquid to a molar content of the isocyanate group in the diisocyanate-based compound is 1:1, the temperature is 60°C, the time is 12 h, a catalyst is dibutyltin dilaurate, and an amount of the catalyst is 0.2 mol% of a sum of the amounts of the imine-based ionic liquid and the diisocyanate-based compound;
the lithium salt is lithium hexafluorophosphate, and the solvent is NMP; and
in the polymer electrolyte, the mass content of the lithium salt is 10% and the mass content of the polymer is 90%.

### Example 8

A preparation method of a battery of this example is substantially the same as that of Example 1, with the difference being as follows:
2) preparation of polymer electrolyte
in the polymer electrolyte, the mass content of the lithium salt is 40%, and the mass content of the polymer is 60%.

### Example 9

A preparation method of a battery of this example is substantially the same as that of Example 1, with the difference being as follows:
2) preparation of polymer
the amine-based ionic liquid includes 1-aminoethyl-3-methylimidazole bis(trifluoromethanesulfonyl)imine, 1-aminopropyl-3-methylimidazole tetrafluoroborate and (6-aminohexyl)triphenylphosphonium bromide bis(trifluoromethanesulfonyl)imine, where a molar ratio of 1-aminoethyl-3-methylimidazole bis(trifluoromethanesulfonyl)imine, 1-aminopropyl-3-methylimidazole tetrafluoroborate and (6-aminohexyl)triphenylphosphonium bromide bis(trifluoromethanesulfonyl)imine is 1:1:1.

### Example 10

A preparation method of a battery of this example is substantially the same as that of Example 1, with the difference being as follows:
2) preparation of polymer
the diene-based compound includes triethylene glycol diacrylate, 1,4-cyclohexanedimethanol divinyl ether and poly(ethylene glycol) diacrylate(Mn = 575), where a molar ratio of triethylene glycol diacrylate, 1,4-cyclohexanedimethanol divinyl ether and poly(ethylene glycol) diacrylate is 1: 1:1.

### Example 11

A preparation method of a battery of this example is substantially the same as that of Example 1, with the difference being as follows:
2) preparation of polymer
the diisocyanate-based compound includes p-phenylene diisocyanate and m-phenylenedimethyl diisocyanate, where a molar ratio of p-phenylene diisocyanate to m-phenylenedimethyl diisocyanate is 1: 1.

### Comparative Example 1

A preparation method of a battery of this comparative example is substantially the same as that of Example 1, with the difference being as follows:
the polymer electrolyte is prepared by a method including the following steps:
mixing polyetheramine D230, hexamethylene diisocyanate, the lithium salt and the solvent, reacting at 60°C for 12 h, and then drying to remove the solvent, to obtain the polymer electrolyte.
in the above reaction, the ratio of the molar content of the amine group of polyetheramine D230 to the molar content of the isocyanate group of the hexamethylene diisocyanate is 1.1:1.

### Comparative Example 2

A preparation method of a battery of this comparative example is substantially the same as that of Example 1, with the difference being as follows:
the polymer electrolyte is prepared by a method including the following steps:
mixing 1-aminoethyl-3-methylimidazole bis(trifluoromethanesulfonyl)imine, 4,4'-methylenedicyclohexyl diisocyanate, the lithium salt and the solvent, reacting at a temperature of 60°C for 12 h, and then drying to remove the solvent, to obtain the polymer electrolyte;
in the above reaction, the ratio of the molar content of the amine group of 1-aminoethyl-3-methylimidazole bis(trifluoromethanesulfonyl)imine to the molar content of the isocyanate group of hexamethylene diisocyanate is 1:2, the catalyst is dibutyltin dilaurate, and the amount of the catalyst is 0.2 mol% of the sum of the amounts of the imine-based ionic liquid and the diisocyanate-based compound.

### Comparative Example 3

A preparation method of a battery of this comparative example is substantially the same as that of Example 1, with the difference being as follows:
the polymer electrolyte is prepared by a method including the following steps:
mixing 1-aminoethyl-3-methylimidazole bis(trifluoromethanesulfonyl)imine, triethylene glycol diacrylate, the lithium salt and the solvent, reacted at 60°C for 12 h, and then drying to remove the solvent, to obtain the polymer electrolyte;
in the above reaction, the ratio of the molar content of the amine group of 1-aminoethyl-3-methylimidazole bis(trifluoromethanesulfonyl)imine to the molar content of the vinyl group of triethylene glycol diacrylate is 1:2, the catalyst is dibutyltin dilaurate, and the amount of the catalyst is 0.2 mol% of the sum of the amounts of the imine-based ionic liquid and the diisocyanate-based compound.

### Comparative Example 4

A preparation method of a battery of this comparative example is substantially the same as that of Example 1, with the difference being as follows:
1) preparation of polymer
   an amine-based ionic liquid, a diene-based compound, and a diisocyanate-based compound were added into a reaction container to carry out a first reaction (the amine-based ionic liquid and the diisocyanate-based compound first reacted to form a urea-based intermediate compound);
   after adding a catalyst, the alkenyl of the diene-based compound and the imine group of the urea-based intermediate compound were subjected to a second reaction, to obtain the polymer;
   where in the first reaction, a ratio of the molar content of the amine group in the amine-based ionic liquid, the molar content of the alkenyl in the diene-based compound, and the molar content of the isocyanate group in the diisocyanate-based compound is 1:1:1, the temperature is 60°C, and the time is 2 h; and
   in the second reaction, the catalyst is dibutyltin dilaurate, the amount of the catalyst is 0.2 mol% of a sum of the amounts of the amine-based ionic liquid, the diene-based compound and the diisocyanate-based compound, the temperature is 60°C, and the time is 12 h.

### Performance Test

The following performance tests were performed on the polymers, polymer electrolytes or batteries in the examples and comparative examples, and the test results are shown in Table 1.

### 1. Infrared test

The polymer of Example 1 was subjected to the infrared test. As can be seen from FIG. 1, in the infrared spectrum of the polymer in Example 1, the absorption peaks at 3308 cm⁻¹ and 1642 cm⁻¹ come from the vibration absorptions of N-H bond and C=O bond in the urea group, respectively; the absorption peak at 1228 cm⁻¹ is the stretching vibration absorption peak of the C-N bond, and the absorption peak at 1373 cm⁻¹ comes from the vibration absorption of the tertiary amine, indicating that there is a tertiary amine group in the polymer structure; the absorption peaks at 1453 cm⁻¹, 1506 cm⁻¹ and 1594 cm⁻¹ come from the stretching vibration absorption of the benzene ring; the absorption peak at 1537 cm⁻¹ comes from the vibration absorption of the skeleton of the imidazole ring, and the absorption peak at 1178 cm⁻¹ comes from the stretching vibration absorption of the imidazole ring; 2860 to 2930 cm⁻¹ are the stretching vibration absorption peaks of the methyl group and the methylene group; the absorption peak at 1102 cm⁻¹ comes from the stretching vibration absorption of the ether bond in the polymer structure. It is proved that Example 1 of the present application successfully prepared the polymer having the structural formula represented by Formula 1.

### 2. Room temperature ionic conductivity

It was tested by using the method specified in "Test Method for Ionic Conductivity of Power Battery Thin Films" (the industry standard NB/T 10827-2021).

### 3. Cycle performance of battery

The test was carried out in accordance with the method specified in the national standard GB/T31486-2015 "Electrical Performance Requirements and Test Methods for Power Batteries for Electric Vehicles".

### 4. Limiting oxygen index

It was tested according to the methods specified in GB/T2406.1-2008 "Plastics-Determination of burning behaviour by oxygen index - Part 1: Guidance" and GB/T2406.2-2009 "Plastics-Determination of burning behaviour by oxygen index-Part 2: Ambient-temperature test".

### 5. Tensile strength test

The tensile strength of the polymer electrolytes was tested according to the standard test method in ASTM D638-14 "Standard Test Method for Tensile Properties of Plastics".

**Table 1**

| | Room temperature ionic conductivity /(mS/cm) | Capacity retention rate of battery (1C/1C, 300 cycles) | Limiting oxygen index | Tensile strength/MPa |
|---|---|---|---|---|
| Example 1 | 0.71 | 96.3% | 35% | 12.2 |
| Example 2 | 0.62 | 95.1% | 33% | 10.4 |
| Example 3 | 0.43 | 92.3% | 36% | 12.4 |
| Example 4 | 0.60 | 94.2% | 34% | 11.8 |
| Example 5 | 0.54 | 95.4% | 35% | 12.3 |
| Example 6 | 0.46 | 92.2% | 40% | 12.3 |
| Example 7 | 0.55 | 93.8% | 31% | 11.6 |
| Example 8 | 0.44 | 91.1% | 31% | 10.3 |
| Example 9 | 0.33 | 90.7% | 35% | 10.2 |
| Example 10 | 0.35 | 91.5% | 32% | 10.7 |
| Example 11 | 0.31 | 92.2% | 37% | 11.4 |
| Comparative Example 1 | 0.10 | 86.4% | 17% | 9.7 |
| Comparative Example 2 | 0.28 | 88.7% | 30% | 9.4 |
| Comparative Example 3 | 0.27 | 88.2% | 29% | 8.8 |
| Comparative Example 4 | 0.09 | 79.8% | 27% | 6.1 |

As can be seen from Table 1, the products of the examples of the present application have excellent room temperature ionic conductivity, battery capacity retention rate and limiting oxygen index. They have excellent performance, and may be widely applied.

Finally, it should be noted that the above examples are only used to illustrate the technical solutions of the present application, but not to limit them. Although the present application is illustrated in detail with reference to the above examples, those of ordinary skill in the art should understand that they may still make modifications to the technical solutions recorded in the above examples or make equivalent substitutions to some or all of the technical features therein; and these modifications or substitutions do not make the essence of the corresponding technical solutions depart from the scope of the technical solutions of the embodiments of the present application

## Claims

1. A polymer, comprising at least a structural formula represented by Formula 1: 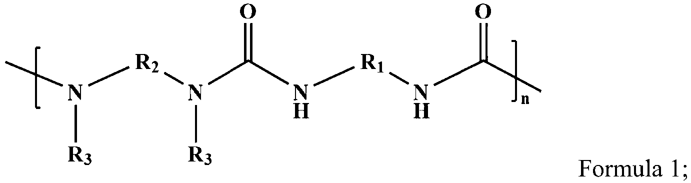
in Formula 1, R₁ is selected from a substituted or unsubstituted C1-C30 alkyl, and a substituted or unsubstituted C6-C60 aryl;
R₂ is selected from a substituted or unsubstituted polyether group, a substituted or unsubstituted C1-C30 alkyl, a substituted or unsubstituted C1-C30 alkoxy, and *-b1-S-S-b2-*; b1 and b2 are each independently selected from a substituted or unsubstituted C2-C15 chain alkyl, and a substituted or unsubstituted C6-C60 aryl;
R₃ is an ionic liquid group; and
n ≥ 1 and n is an integer.

2. The polymer according to claim 1, wherein when the polymer comprises a plurality of structural formulas of Formula 1, R₃ is selected from the same ionic liquid group.

3. The polymer according to claim 1, wherein when the polymer comprises a plurality of structural formulas of Formula 1, at least one of the following conditions is met:
a) R₁ in the plurality of structural formulas of Formula 1 is selected from the same group; and
b) R₂ in the plurality of structural formulas of Formula 1 is selected from the same group.

4. The polymer according to claim 1, wherein R₃ is selected from one of an imidazole-based ionic liquid group, a pyridine-based ionic liquid group, a quaternary ammonium-based ionic liquid group or a quaternary phosphonium-based ionic liquid group.

5. The polymer according to claim 4, wherein the R₃ is selected from any one of the following groups: 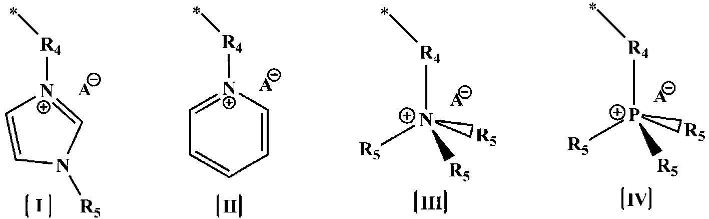 wherein R₄ is selected from a substituted or unsubstituted C1-C30 alkyl and a substituted or unsubstituted C1-C30 alkoxy; R₅ is selected from a substituted or unsubstituted C1-C10 alkyl; and A is selected from BF₄⁻, PF₆⁻, TFSI⁻, OTf, DCA⁻ or TOS⁻.

6. The polymer according to any one of claims 1 to 5, wherein R₂ is selected from any one of the following groups: 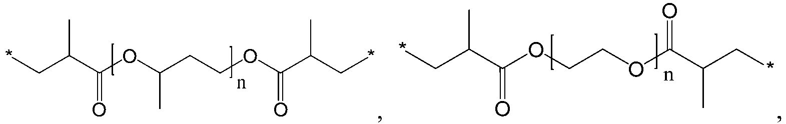 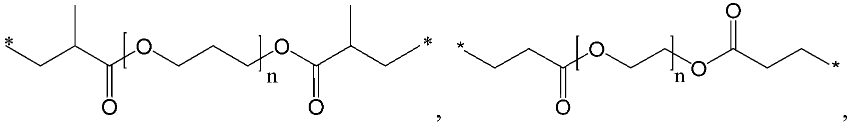 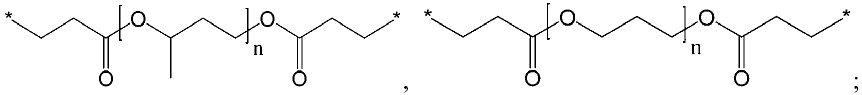 wherein n is a positive integer.

7. The polymer according to any one of claims 1 to 6, wherein at least one of the following conditions is met:
a) R₁ is a cyclic structure; and
b) R₂ is a chain structure.

8. The polymer according to any one of claims 1 to 7, wherein the polymer is obtained by reacting an imine-based ionic liquid with a diisocyanate-based compound.

9. A polymer electrolyte, comprising a lithium salt and the polymer according to any one of claims 1 to 8.

10. The polymer electrolyte according to claim 9, wherein a mass content of the lithium salt in the polymer electrolyte is 5% to 30%, and a mass content of the polymer is 70% to 95%.

11. A separator, comprising: a porous substrate; and the polymer according to any one of claims 1 to 8 or the polymer electrolyte according to claim 9 or 10, disposed on at least part of a surface of the porous substrate and/or in at least part of pores of the porous substrate.

12. A battery, comprising the polymer according to any one of claims 1 to 8;
or, comprising the composite electrolyte according to claim 9 or 10;
or, comprising the separator according to claim 11.
